# EUROPÄISCHE PATENTANMELDUNG

(11) **EP 0 932 185 A1**
(43) Veröffentlichungstag der Anmeldung: **28.07.1999**
(21) Anmeldenummer: 97122800.2
(22) Anmeldetag: 23.12.1997
(51) Int. Cl.: H01J 61/44, C09K 11/80, C09K 11/81, C09K 11/78, C09K 11/59, C09K 11/64

(54) **Signallampe und Leuchtstoffe dazu**

(71) Anmelder: Patent-Treuhand-Gesellschaft für elektrische Glühlampen mbH, 81543 München (DE)
(72) Erfinder: Zachau, Martin, Dr., 82269 Geltendorf (DE); Müller, Ulrich, 81479 München (DE)

(57) **Zusammenfassung**

Die Erfindung behandelt eine Signallampe mit VUV-Leuchtstoffanregungen, insbesondere für Anwendungen im Verkehr. Sie bezieht sich ferner auch auf die Verwendung von Leuchtstoffmischungen für rote, grüne und gelbe Signallampen und auf eine entsprechend aufgebaute Verkehrsampel.

## Beschreibung

### Technisches Gebiet

Die vorliegende Erfindung bezieht sich auf Signallampen, insbesondere im Bereich von Verkehrssignalen und -schildern. Nach einem besonderen Gesichtspunkt bezieht sie sich auf Signallampen für eine Verkehrsampel.

Allgemein findet die Lampentechnik nicht nur bei Beleuchtungsaufgaben Anwendung. So ist auch der Bereich der Signallampen ein wichtiges Gebiet der Lampentechnik. Signallampen werden in sehr vielen Bereichen des täglichen Lebens eingesetzt, so z.B. im Straßenverkehr, bei der Schifffahrt und bei der Bahn. Ferner spielen sie praktisch bei jeder Form von von einer Bedienungsperson zu bedienenden oder zu überwachenden technischen Einrichtungen eine Rolle, sei es im Bereich der Haushaltsgeräte oder bei der Unterhaltungselektronik. Ferner ist die Sicherheitsbeschilderung von Gebäuden oder Verkehrs-, Gewerbe- oder Industrieanlagen zu erwähnen, z.B. Flughäfen, Bahnhöfe, Kinos, öffentliche Gebäude und dergleichen mehr. Dabei sind beispielsweise Signallampen für die Ausweisung von Fluchtwegen, zum Hinweis auf Gefahrenstellen, zum Hinweis auf besondere Situationen wie etwa Brandalarm und dergleichen mehr im Einsatz.

### Stand der Technik

Typisch für den Bereich der Signallampen sind besondere Anforderungen an die Zuverlässigkeit, die einerseits von Sicherheitsgesichtspunkten herrühren, andererseits durch die große zahlenmäßige und örtliche Verbreitung und die damit verbundenen erheblichen Aufwendungen für Wartung und Instandsetzung bedingt sind. Darüber hinaus ist es in vielen Anwendungsfällen notwendig oder erwünscht, besondere Bauformen, z.B. besonders flache Signallampen, verwenden zu können.

Konventionell werden bei Signallampen im allgemeinen normale Glühlampen oder Halogenglühlampen verwendet. Dies gilt insbesondere für die zahlreichen Signallampen, die im Betrieb ein- und ausgeschaltet werden müssen.

Glühlampen einschließlich Halogenglühlampen weisen aber wesentliche Nachteile auf: Durch die Verwendung einer mehr oder weniger filigranen Glühwendel sind sie grundsätzlich relativ vibrationsempfindlich, was insbesondere im Verkehrsbereich zu Einschränkungen im Einsatz führt.

Darüber hinaus ist ihre Betriebsdauer je nach Lampentyp und nach verwendeter Betriebsspannung auf einige tausend Stunden beschränkt. Ein frühes Ende dieser Betriebsdauer ist aber wegen der wie erwähnt häufig großen Zahl und großen örtlichen Verbreitung von Signallampen genauso wie eine anderweitige Defektanfälligkeit sehr nachteilig.

Bei vielen Anwendungen müssen die Glühlampen in einem optischen System, z.B. mit einem Reflektor und/oder mit Linsen, eingebaut werden. Solche Systeme sind anfällig bezüglich der Fehljustage eines Lampensockels oder anderer Elemente. Darüber hinaus ist eine gewisse innere Verschmutzung, vor allem im Verkehrsbereich, grundsätzlich unvermeidlich, so daß es auch nach aufwendigen Innenreinigungen im allgemeinen nicht gelingt, die anfängliche Leistung der Lampe wieder herzustellen.

Vor allem bei Glühlampenanwendungen, die z.B. zur Beleuchtung einer größeren Signalisierungsfläche oder zur Steuerung der Ausstrahlungsrichtung der Signallampen ein optisches System mit Reflektoren oder Linsen aufweisen, ist eine relativ unhandliche Baugröße und -form oder ein entsprechendes Gewicht unvermeidlich, in vielen Fällen jedoch sehr unerwünscht.

Im Bereich von Signallampen sind außerdem LEDs, also lichtemittierende Dioden, bekannt. Sie haben jedoch den Nachteil, daß der für Signallampenanwendungen wichtige und häufig genormte Farbort nicht einstellbar ist. Gelegentlich sind sie auch wegen der Abstrahlcharakteristik ungeeignet.

### Darstellung der Erfindung

Dieser Erfindung liegt somit das technische Problem zugrunde, eine neue Signallampe mit neuen Möglichkeiten zur Vermeidung der erwähnten Schwierigkeiten anzugeben. Die Erfindung bezieht sich ferner auf bevorzugte Mittel zur Herstellung einer erfindungsgemäßen Signallampe, und zwar die Verwendung bestimmter Leuchtstoffe oder Leuchtstoffmischungen, wie im folgenden ausgeführt.

Erfindungsgemäß sind vorgesehen eine Signallampe nach Anspruch 1 und ihre Verwendungen nach den Ansprüchen 14, 15 und 16. Ferner gibt die Erfindung in den Ansprüchen 3, 4, 10 und 12 Leuchtstoffe bzw. Leuchtstoffmischungen zur Verwendung in einer grünen, einer gelben bzw. einer roten Signallampe an.

Erfindungsgemäß ist also eine Leuchtstofflampe vorgesehen, und zwar konkret eine Leuchtstofflampe mit einer besonders kurzwelligen Anregung im VUV-Bereich (Vakuum-Ultraviolett-Bereich), d.h. bei einer Wellenlänge unter 200 nm. Besonders bevorzugt sind dabei Anregungswellenlängen unter 185 nm bzw. unter 180 nm. Leuchtstofflampen haben hinsichtlich ihrer Betriebsdauer, Zuverlässigkeit und auch hinsichtlich der erzielbaren Bauformen und -größen wesentliche Vorteile gegenüber Glühlampen. Dabei sind VUV-Leuchtstofflampen ein technisch relativ neuer und besonders interessanter Bereich.

Dies betrifft vor allem die dielektrisch behinderten Entladungen, vor allem von Edelgasen, und vor allem auch die dielektrisch behinderte Xe-Excimerlampe. Zu den baulichen und elektrotechnischen Einzelheiten dielektrisch behinderter Gasentladungslampen wird verwiesen auf die Anmeldungen DE-P 43 11 197.1 (WO 94/23442), DE 195 26 211.5 (WO 97/04625), DE 196 36 965.7 und hinsichtlich der speziellen Anwendungen einer Verkehrsampel vor allem auf die Parallelanmeldung 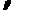 Flache Signallampe mit dielektrisch behinderter Entladung" von der gleichen Anmelderin und mit dem gleichen Anmeldetag, wobei der jeweilige Offenbarungsgehalt der genannten Anmeldungen durch Inbezugnahme in dieser Anmeldung mit eingeschlossen ist. Dies betrifft vor allem die Pulstechnik beim elektrischen Betrieb, die Elektrodenkonfigurationen für besonders gleichmäßig ausgeleuchtete Lampen und spezielle, vor allem flache, Bauformen sowie wie erwähnt den Aufbau einer Verkehrsampel aus dielektrisch behinderten Gasentladungslampen.

Im Bereich der Signallampen haben die Farben Rot, Grün und Gelb besondere Bedeutung, z.B. bei Verkehrsampeln, Kraftfahrzeugsignallampen (Gelb und Rot), Schiffslampen (Grün und Rot für Steuerbord und Backbord) usw. Die Erfindung betrifft daher insbesondere Leuchtstoffe und Leuchtstoffmischungen, mit denen sich bei VUV-Anregungen entsprechende Signallampen realisieren lassen. In vielen Fällen sind dabei auch Normierungen zu beachten, so etwa bei den Kraftfahrzeugrückleuchten oder Verkehrsampeln.

Um mit den grünen Signallampen zu beginnen, haben sich erfindungsgemäß die in den Ansprüchen aufgeführten Leuchtstoffe BaMgAl₁₀O₁₇:Mn, Zn₂SiO₄:Mn, Sr₄Al₁₄O₂₅:Eu, BaMgAl₁₀O₁₇:Eu, LaPO₄:Ce,Tb und Y₃Al₅O₁₂:Ce als im VUV-Anregungsbereich verwendbare Leuchtstoffe herausgestellt, aus denen sich ein Signalgrün durch entsprechende Mischung herstellen läßt. Insbesondere lassen sich mit dem Leuchtstoff Sr₄Al₁₄O₂₅:Eu allein bereits in vielen Anwendungsfällen auf besonders einfache und damit vorteilhafte Weise grüne Signallampen herstellen. Es hat sich erfindungsgemäß nämlich herausgestellt, daß der entsprechende Farbort bei VUV-Anregung - vergleiche das Ausführungsbeispiel - besonders günstig liegt.

Ferner hat sich herausgestellt, daß sich durch eine Mischung aus BaMgAl₁₀O₁₇:Mn und/oder Zn₂SiO₄:Mn auf der einen und Sr₄Al₁₄O₂₅:Eu und/oder BaMgAl₁₀O₁₇:Eu auf der anderen Seite in flexibler Weise Signalgrüntöne mischen lassen, wobei sich entsprechende Normierungen z.B. für Ampelgrün (wie im Ausführungsbeispiel für den Fall der deutschen DIN-Norm gezeigt) erfüllen lassen.

Zusätzliche Freiheit gewinnt man durch Hinzufügen einer dritten Komponente aus LaPO₄:Ce,Tb und/oder Y₃Al₅O₁₂:Ce, die in der xy-Farbebene bei deutlich höheren x-Werten liegen. Demgegenüber läßt sich durch die ersten beiden genannten Mischungskomponenten aus BaMgAl₁₀O₁₇:Mn und Zn₂SiO₄:Mn bei höheren y-Werten und Sr₄Al₁₄O₂₅:Eu und insbesondere BaMgAl₁₀O₁₇:Eu bei niedrigeren y-Werten der Bereich niedrigerer x-Werte erfassen. Unter den genannten und/oder-verknüpften Leuchtstoffpaaren wird im Sinne der Erfindung bevorzugt wie folgt gewählt:

Es hat sich herausgestellt, daß der Leuchtstoff BaMgAl₁₀O₁₇:Eu bei VUV-Bestrahlung eine relativ schlechte Maintenance, d.h. Aufrechterhaltung der Ausbeute und des Farborts über die Betriebszeit, zeigt, weswegen Sr₄Al₁₄O₂₅:Eu demgegenüber bevorzugt ist. Sr₄Al₁₄O₂₅:Eu weist im übrigen die gegenüber dem bezüglich der visuellen Wirkung (d.h. der Empfindlichkeit des menschlichen Auges) optimalen Spektralgrünpunkt bei 550 nm auf dem Spektralzug nähere Lage im xy-Farbdiagramm auf.

Andererseits lassen sich die Maintenance-Eigenschaften des Leuchtstoffs BaMgAl₁₀O₁₇:Eu durch einen überstöchiometrischen Mg-Anteil erheblich verbessern, wie in der US-Parallelanmeldung 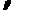 Barium Magnesium Aluminate Phosphor" von der gleichen Anmelderin sowie der Mitanmelderin Osram Sylvania Inc. und mit dem gleichen Anmeldetag im einzelnen dargestellt und beansprucht wird. Der Offenbarungsgehalt dieser US-Parallelanmeldung ist hierdurch unter Bezugnahme mit eingeschlossen. Insgesamt ist Sr₄Al₁₄O₂₅:Eu aber auch gegenüber dem BaMgAl₁₀O₁₇:Eu-Leuchtstoff mit überstöchiometrischem Mg-Anteil vor allem hinsichtlich der Maintenance-Eigenschaften zu bevorzugen.

In der Paarung BaMgAl₁₀O₁₇:Mn und Zn₂SiO₄:Mn liegt zunächst der Farbwert von Zn₂SiO₄:Mn näher am 550 nm-Punkt auf dem Spektralzug und erscheint damit zunächst als naheliegende Wahl. Andererseits hat sich erfindungsgemäß herausgestellt, daß Zn₂SiO₄:Mn herstellungstechnisch sehr problematisch ist und insbesondere bei VUV-Bestrahlung zu Instabilitäten neigt und außerdem BaMgAl₁₀O₁₇:Mn vor allem bei der erfindungsgemäß bevorzugten Anregung durch eine Xe-Excimerentladung die bessere Quantenausbeute zeigt.

Bei dem verbleibenden Paar LaPO₄:Ce,Tb und Y₃Al₅O₁₂:Ce hat sich herausgestellt, daß LaPO₄:Ce,Tb bei VUV-Anregung eine deutlich bessere Ausbeute als Y₃Al₅O₁₂:Ce zeigt und daher zu bevorzugen ist.

Es ist aber grundsätzlich auch möglich, mit nur zwei Leuchtstoffen im Grünbereich auszukommen, was sich im Fall der Kombination BaMgAl₁₀O₁₇:Mn und BaMgAl₁₀O₁₇:Eu auf eine Doppelaktivierung des gleichen Wirtsgitters, also den Leuchtstoff BaMgAl₁₀O₁₇:Mn,Eu, reduziert. Dann kann durch die relative Konzentration der Aktivierungselemente Eu und Mn der richtige Grünfarbwert eingestellt werden.

Bei den gelben Signalfarbwerten muß relativ nahe am Spektralzug gearbeitet werden, wo die einschlägigen Normierungen liegen. Dazu ist erfindungsgemäß eine Mischung aus (Y,Gd)BO₃:Eu einerseits und Zn₂SiO₄:Mn und/oder LaPO₄:Ce,Tb andererseits vorgesehen. LaPO₄:Ce,Tb zeigt dabei gegenüber Zn₂SiO₄:Mn bei VUV-Anregung die bessere Ausbeute, weswegen die Kombination (Y,Gd)BO₃:Eu und LaPO₄:Ce,Tb bevorzugt ist. Dadurch kann der interessante Bereich in der Nähe des Spektralzugs erreicht werden, wobei jedoch nicht zu übersehen ist, daß Zn₂SiO₄:Mn durch seine nähere Lage zum Spektralzug einen Vorteil gegenüber LaPO₄:Ce,Tb hat. Wenn also ein Farbort besonders nahe am Spektralzug erwünscht ist, kann auf Zn₂SiO₄:Mn nicht verzichtet werden.

Besondere Schwierigkeiten haben sich bei Signalrot ergeben. Der Leuchtstoff (Y,Gd)BO₃:Eu mit einer orangefarbenen Hauptemission hat dabei einen bei zu kurzen Wellenlängen liegenden Farbwert. Andere Rotleuchtstoffe wie etwa Y₂O₂S:Eu oder YVO₄:Eu liegen in dieser Hinsicht sehr viel günstiger im Farbwertdiagramm.

Andererseits hat sich erfindungsgemäß herausgestellt, daß gerade bei Signalrot erhebliche Ausbeuteprobleme auftreten und (Y,Gd)BO₃:Eu im VUV-Bereich unter den Rotleuchtstoffen die bei weitem beste Ausbeute zeigt, und zwar in der realen Lampe noch deutlicher als in der Pulverprobe. Erfindungsgemäß wird also die nicht ganz optimale Lage von (Y,Gd)BO₃:Eu in Kauf genommen, um eine für die praktische Anwendung ausreichende Ausbeute zu erzielen. Je nach zu erreichender Rotnorm wird dann ein zusätzliches Rotfilter verwendet. Es hat sich nämlich gezeigt, daß trotz der Filterverluste die Kombination (Y,Gd)BO₃:Eu und zusätzliche Farbfilterung letztlich effizienter ist als die Verwendung eines anderen Rotleuchtstoffs mit schlechterer Ausbeute. Das Filter sollte dabei möglichst scharfkantig und beispielsweise hinsichtlich der deutschen Norm für Ampelrot eine Abschneidkante etwa bei 595 nm zeigen.

Bevorzugte Anwendungsgebiete einer erfindungsgemäßen Signallampe sind leuchtende Verkehrsschilder oder Verkehrssignale, und zwar sowohl im Straßenverkehr als auch im Schienen- oder Schiffsverkehr. Dabei bezieht sich die Erfindung insbesondere im Hinblick auf die oben erläuterten Leuchtstoffmischungen für die Farben Grün, Gelb, Rot vor allem auf eine Verkehrsampel. Ein weiteres wichtiges Anwendungsgebiet liegt aber daneben auch bei Kraftfahrzeuglampen, etwa roten Rücklichtern, Bremslichtern oder gelben Richtungsanzeigern.

Die oben verwendeten Kurzformeln für die verschiedenen Leuchtstoffe sind für diese Anmeldung wie folgt zu verstehen, wobei die engeren unteren und (unabhängig von den unteren) die engeren oberen Grenzen als jeweils entspechend bevorzugt zu verstehen sind:

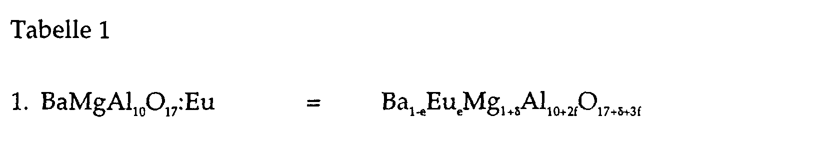

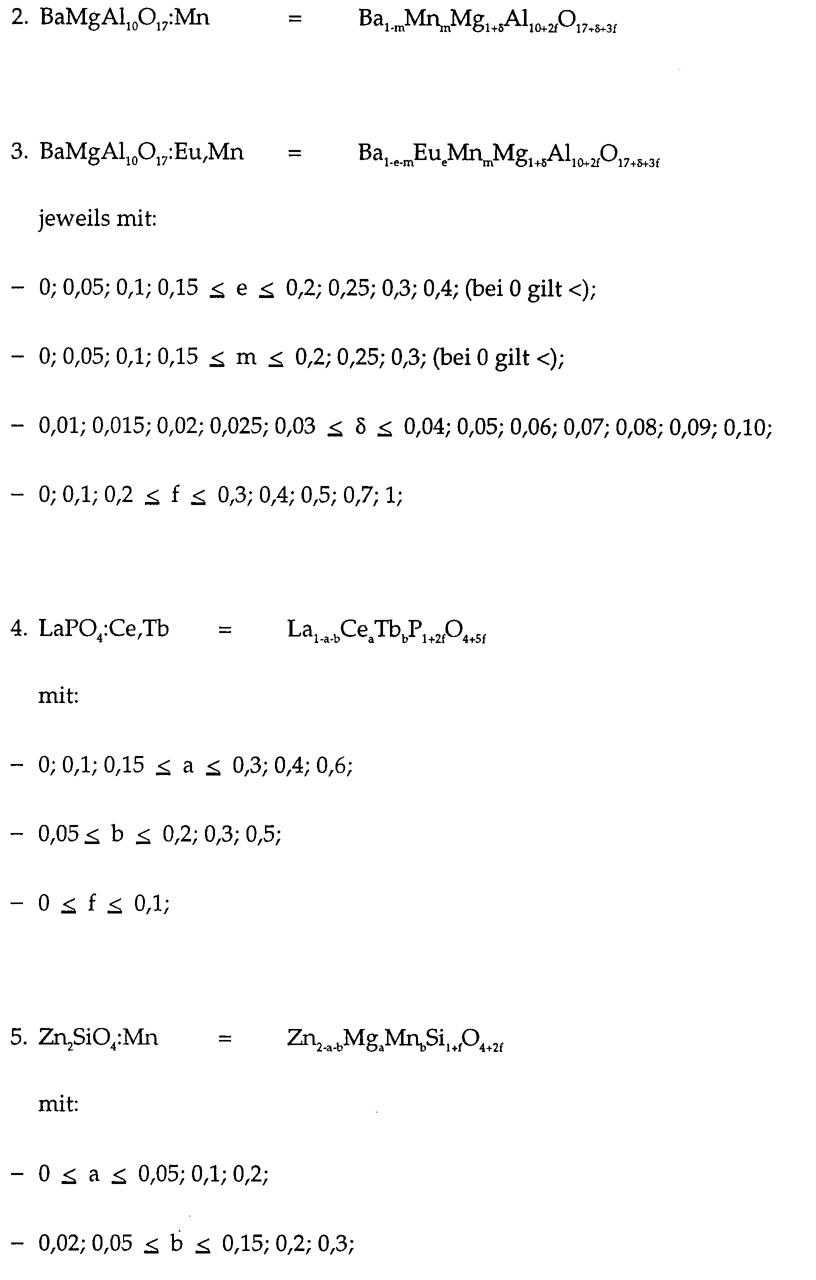

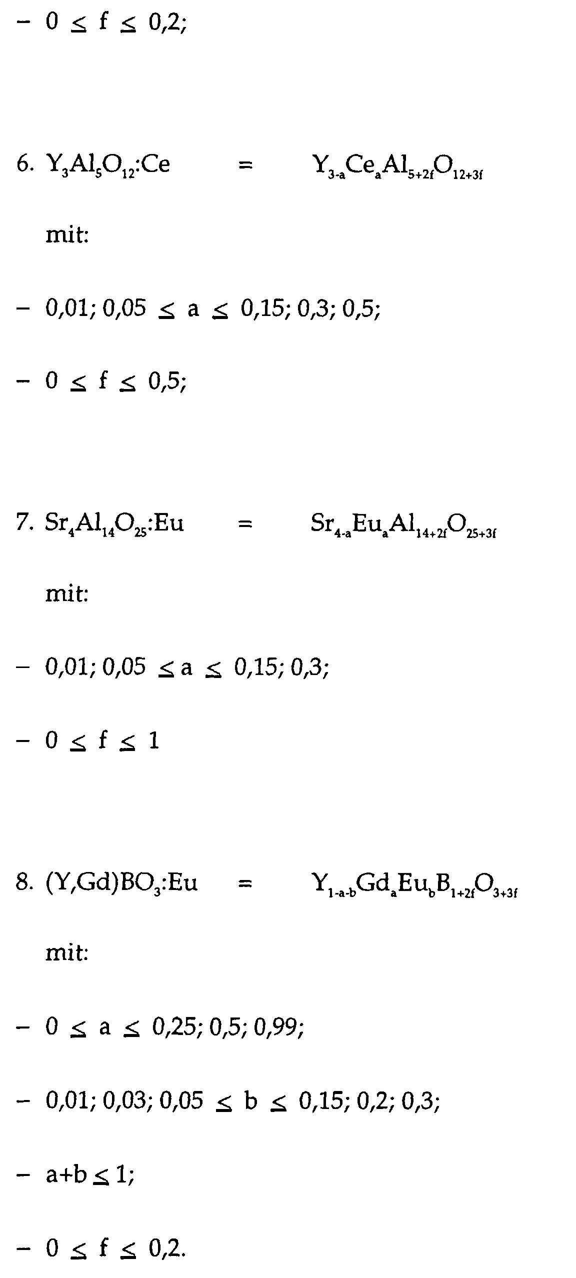

Neben den beschriebenen Idealzusammensetzungen sind auch Zusammensetzungen inbegriffen, die aus den genannten Konzentrationsbereichen herausfallen, jedoch in der Nachbarschaft dazu liegen und phasengleich sind.

### Beschreibung der Zeichnungen

Im folgenden werden einige Ausführungsbeispiele für die Erfindung anhand der Figuren erläutert. Dabei zeigt:
Fig. 1 ein xy-Normfarbwertdiagramm mit Farbörtern der hier interessierenden Leuchstoffe und einem als Beispiel eingezeichneten Normbereich für Ampelgrün;
Fig. 2 einen Ausschnitt aus Fig. 1 in vergrößerter Darstellung mit weiteren Beispielen für rote und gelbe Normsignalfarben.

Für die erfindungsgemäße Mischung der Leuchtstoffe zur Erfüllung bestimmter Signalfarbnormen durch die Leuchtstoffmischung ist es zunächst erforderlich, die Farbörter der interessierenden Leuchtstoffe bei VUV-Anregung zu messen. Ohne daß dies einschränkend zu verstehen wäre, liegen dabei der Beschreibung der Ausführungsbeispiele folgende Meßwerte für typische Beispiele aus den zuvor angegebenen Zusammensetzungsbereichen zugrunde:

**Tabelle 2**

| | |
|---|---|
| 1. BaMgAl₁₀O₁₇:Eu: | x = 0,155; y = 0,058; |
| 2. BaMgAl₁₀O₁₇:Mn: | x = 0,141; y = 0,741; |
| 3. LaPO₄:Ce,Tb: | x = 0,338; y = 0,577; |
| 4. Zn₂SiO₄:Mn: | x = 0,228; y = 0,694; |
| 5. Y₃Al₅O₁₂:Ce: | x = 0,391; y = 0,483; |
| 6. Sr₄Al₁₄O₂₅:Eu: | x = 0,141; y = 0,368; |
| 7. (Y,Gd)BO₃:Eu: | x = 0,640; y = 0,359. |

Die der Erfindung zugrundeliegenden Farbörter der einzelnen Leuchtstoffe waren nicht bekannt und entsprechen nicht den im allgemeinen dokumentierten Daten zu Hg-Entladungsanregungen.

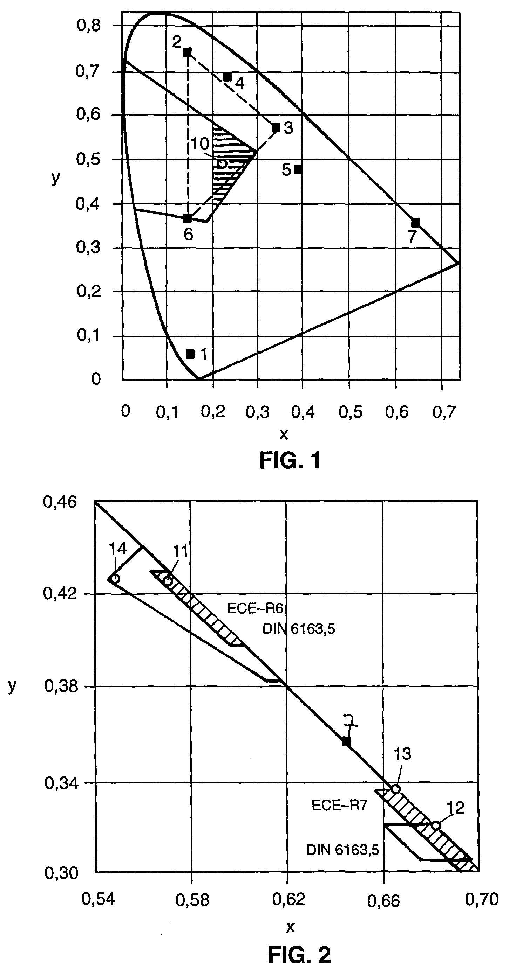

In Fig. 1 ist eine xy-Normfarbwertebene als Diagramm dargestellt. Zu erkennen sind der geschwungene Spektralfarbenzug und in der eingeschlossenen Fläche die den in den beiden Tabellen spezifizierten Leuchtstoffen entsprechenden Farbörter. Dabei entsprechen die Bezugsziffern der Numerierung der obigen Tabelle 2. Etwa zwischen x=0 und x=0,3 sowie y=0,35 und y=0,7 ist ein Bereich grüner Farbwerte zu erkennen (einschließlich des schraffierten Dreiecks am rechten Rand), der die hier für das bevorzugte Ausführungsbeispiel herangezogene deutsche Norm für Verkehrsampelgrün DIN 6163,5 darstellt.

Man erkennt, daß der Leuchtstoff Sr₄Al₁₄O₂₅:Eu, der mit dem Bezugzeichen 6 bezeichnet ist, an der Grenze der DIN-Norm liegt. Er kann damit im Rahmen der DIN-Norm auch als einzelner Leuchtstoff ohne zweite Komponente verwendet werden, allerdings nur bei sehr gut kontrollierten Herstellungsbedingungen, weil er bei den im allgemeinen üblichen Schwankungen leicht aus dem normierten Bereich heraustreten kann.

Alle weiteren hier betrachteten VUV-anregbaren Leuchtstoffe liegen außerhalb des Normbereichs. Man erkennt jedoch, daß bereits Zweikomponentenmischungen in den Normbereich führen. Dabei ist das BaMgAl₁₀O₁₇:Eu mit überstöchiometrischen Mg-Anteil wegen seiner besseren VUV-Beständigkeit bevorzugt. Eine besonders vorteilhafte Wahl ist darüber hinaus auch die Doppelaktivierung von BaMgAl₁₀O₁₇ mit Eu und Mn (als Einkomponentensystem), was der Verbindungslinie zwischen den mit dem Bezugszeichen 1 und 2 bezeichneten Punkten entspricht.

Eine weitere vorteilhafte Kombination ist die Zweierkombination aus Sr₄Al₁₄O₂₅Eu, Bezugsziffer 6, und BaMgAl₁₀O₁₇:Mn, Bezugsziffer 2.

Erfindungsgemäß hat sich jedoch der als schraffiertes Dreieck markierte Bereich der Normgrünfläche als der Bereich mit dem besten visuellen Nutzeffekt herausgestellt. Dies ergibt sich nicht einfach aus dem bereits erwähnten Kriterium der Entfernung zu dem 550 nm-Punkt auf dem Spektralzug, das nur für Einzelemissionen gilt. Jedoch hat sich bei wiederholten Computersimulationen der schraffiert eingezeichnete Bereich auch hinsichtlich des visuellen Nutzeffekts der Leuchtstoffmischungen als günstig herausgestellt. Dieser Bereich läßt sich am besten mit einer erfindungsgemäßen Dreierkombination aus Sr₄Al₁₄O₂₅:Eu (6), BaMgAl₁₀O₁₇:Mn (2) und LaPO₄:Ce,Tb (3) treffen. Dabei ist insbesondere zu berücksichtigen, daß eine Zweierkombination aus Sr₄Al₁₄O₂₅:Eu (6) und LaPO₄:Ce,Tb (3) vor allem bei in der bevorzugten rechten Spitze des schraffierten Dreiecks liegenden Farbörtern zu nahe an der nach rechts unten im Diagramm weisenden Grenze der DIN-Norm liegt.

Das Ausführungsbeispiel für Signalgrün einer DIN-gerechten Verkehrsampel betrifft daher, in Gewichtsprozent, die Mischung 50% Sr₄Al₁₄O₂₅:Eu, 45% LaPO₄:Ce,Tb sowie 5% BaMgAl₁₀O₁₇:Mn. Daraus ergibt sich der mit dem Bezugszeichen 10 (x=0,284, y=0,520) bezeichnete Farbort.

Die hier am Beispiel der deutschen DIN-Norm veranschaulichte Mischung einer normgerechten grünen Leuchtstoffmischung ist analog auch bei anderen Normen für Signalgrün durchzuführen.

In der Nähe des Spektralfarbenzugs bei relativ großen x-Werten in Fig. 1 ist mit dem Bezugszeichen 7 der Leuchstoff (Y,Gd)BO₃:Eu eingezeichnet. Seine Lage ergibt sich deutlicher aus Fig. 2, in der zusätzlich einige Normen für Signalgelb und Signalrot dargestellt sind.

Zunächst stellt der größere, nicht schraffierte Bereich im linken oberen Teil von Fig. 2 die Norm für das Signalgelb einer Verkehrsampel nach DIN 6163,5 dar. Erfindungsgemäß wird dieses Signalgelb realisiert durch eine Leuchtstoffmischung aus (Y,Gd)BO₃:Eu, Bezugszeichen 7, Zn₂SiO₄:Mn, Bezugszeichen 4, und LaPO₄:Ce,Tb, Bezugszeichen 3. Dabei wird im vorliegenden Fall der Leuchtstoff Zn₂SiO₄:Mn (4) dazu verwendet, den Farbort der (Y,Gd)BO₃:Eu - LaPO₄:Ce,Tb - Mischung (7,3) näher an den Spektralfarbenzug zu schieben, weil Zn₂SiO₄:Mn (4), wie Fig. 1 zeigt, etwas näher am Spektralfarbenzug liegt. Dabei wird allerdings möglichst wenig Zn₂SiO₄:Mn zugegeben. Bei diesem Ausführungsbeispiel wird eine Zusammensetzung von 58% (Y,Gd)BO₃:Eu und 42% LaPO₄:Ce,Tb und kein Zn₂SiO₄:Mn verwendet (jeweils Gewichtsprozent). Der Farbort dieses Beispiels trägt das Bezugszeichen 14.

Es ist je nach genauem Verlauf der zu erfüllenden Norm und je nach den zu berücksichtigenden Fertigungstoleranzen bzw. Farbortschwankungen in der Produktion möglich und dann auch bevorzugt, mit einer Zweikomponentenmischung nur aus (Y,Gd)BO₃:Eu und LaPO₄:Ce,Tb zu arbeiten. Die zweite eingezeichnete und schraffierte Normfläche innerhalb der eben behandelten DIN-Normfläche betrifft die europäische Norm ECE-R6 für gelbe Kraftfahrzeuglampen, also Richtungsanzeiger. Diese Norm kann erfüllt werden durch die beschriebene gelbe Leuchtstoffmischung in Verbindung mit einem zusätzlichen Filter, das Wellenlängen etwa unter 500 nm sperrt (und zwar einem Schrumpfschlauch, Farbe 93046, Firma Rehau AG und Co., 95104 Rehau). Dabei wird der mit 11 bezeichnete Farbort realisiert.

Schließlich zeigt die rechte untere Ecke in Fig. 2 zwei Normen für Signalrot. Die nicht-schraffierte Fläche mit dem mit 12 bezeichneten Farbort in der rechten oberen Ecke entspricht der DIN 6163,5 für Ampelrot. Eine VUV-Leuchtstofflampe mit einem Farbort in dieser Norm wird nach der Erfindung realisiert durch den Leuchtstoff (Y,Gd)BO₃:Eu, mit 7 bezeichnet, in Verbindung mit einem geeigneten Filter.

Hier wie auch im zuvor beschriebenen Fall des Kraftfahrzeuggelbs kommt es bei den Filtern neben den optischen Eigenschaften auch auf eine gewisse Beständigkeit gegen Stöße, Kratzer, Temperaturen bis etwa 100°C und UV-Strahlung an. Zusammen mit einer etwa 595 nm angestrebten Abschneidkante des Filters haben sich dabei für den Fall des Ampelrots im Beispiel ein Filter aus Plexiglasformmasse in 3 mm Wandstärke (Einfärbung Nr. 33700) der Röhm GmbH in Darmstadt, ein Polyester-Farbeffektfilter Nr. 182 von Lee Filters aus Andover, Hampshire, England, deutscher Vertrieb Kobold, Wolfratshausen oder auch eine Spinnwebstreuscheibe (Typ 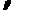 Niedervolt") der DESAG in 31073 Grünenplan als geeignet erwiesen. Das letztgenannte Filter ist eine konventionelle rote Ampelstreuscheibe für Niedervolttechnik.

Im Falle der zweiten, schraffiert gezeichneten europäischen Norm ECE-R7 für Kraftfahrzeugrot (d.h. Bremslichter und Rückleuchten) muß etwas weniger gefiltert werden, so daß die Gesamtausbeute steigt. Dies liegt daran, daß die in Fig. 2 rechte obere Ecke dieses genormten Bereiches näher am Farbort des Leuchtstoffs (Y,Gd)BO₃:Eu (7) liegt. Der eingezeichnete Farbort mit dem Bezugszeichen 13 entspricht dabei der Verwendung eines Farbeffektfilters Nr. 164 von Lee Filters.

Bezüglich des konkreten technischen Aufbaus einer VUV-Leuchstofflampe zur Verwendung der soeben beschriebenen Leuchtstoffmischungen wird nochmals verwiesen auf die Parallelanmeldung ....., in der eine Xe-Excimerlampe insbesondere für eine Verkehrsampel dargestellt ist. Die Offenbarung dieser Anmeldung ist hierdurch in Bezugnahme ausdrücklich mit eingeschlossen. Es ist klar, daß in analoger Weise verschiedene Signallampenformen realisiert werden können, z.B. Kraftfahrzeuglampen oder Leuchten für Verkehrsschilder, wobei je nach Anwendung auch andere als die vorstehend beschriebenen Normen und Farbörter relevant sein können.

## Patentansprüche

1. Signallampe als Gasentladungslampe mit einer Leuchtstoffanregung im VUV-Bereich bei einer Wellenlänge unter 200 um.

2. Signallampe nach Anspruch 1 als dielektrisch behinderte Gasentladungslampe, insbesondere als Xe-Excimerlampe.

3. Verwendung einer Leuchtstoffmischung aus zumindest
- Sr₄Al₁₄O₂₅:Eu
zur Herstellung einer grünen Signallampe nach Anspruch 1 oder 2.

4. Verwendung einer Leuchtstoffmischung aus zumindest
- erstens BaMgAl₁₀O₁₇:Mn und/oder Zn₂SiO₄:Mn und
- zweitens Sr₄Al₁₄O₂₅:Eu und/oder BaMgAl₁₀O₁₇:Eu
zur Herstellung einer grünen Signallampe nach Anspruch 1 oder 2.

5. Verwendung einer Leuchtstoffmischung nach Anspruch 3 oder 4, wobei die Leuchtstoffmischung zusätzlich
- LaPO₄:Ce,Tb und/oder Y₃Al₅O₁₂:Ce
enthält.

6. Verwendung einer Leuchtstoffmischung nach Anspruch 3 oder 4, wobei die Leuchtstoffmischung
- LaPO₄:Ce,Tb,
- aber kein Y₃Al₅O₁₂:Ce
enthält.

7. Verwendung einer Leuchtstoffmischung nach einem der Ansprüche 3 bis 6, wobei die Leuchtstoffmischung
- BaMgAl₁₀O₁₇:Mn,
- aber kein Zn₂SiO₄:Mn
enthält.

8. Verwendung einer Leuchtstoffmischung nach einem der Ansprüche 3 bis 7, wobei die Leuchtstoffmischung
- doppelt aktiviertes BaMgAl₁₀O₁₇:Eu,Mn
enthält.

9. Verwendung einer Leuchtstoffmischung nach einem der Ansprüche 3 bis 8, wobei die Leuchtstoffmischung
- Sr₄Al₁₄O₂₅:Eu,
- aber kein BaMgAl₁₀O₁₇:Eu
enthält.

10. Verwendung einer Leuchtstoffmischung aus zumindest
- erstens (Y,Gd)BO₃:Eu und
- zweitens Zn₂SiO₄:Mn und/oder LaPO₄:Ce,Tb
zur Herstellung einer gelben Signallampe nach Anspruch 1 oder 2.

11. Verwendung einer Leuchtstoffmischung nach Anspruch 10, wobei die Leuchtstoffmischung
- LaPO₄:Ce,Tb,
- aber kein Zn₂SiO₄:Mn
enthält.

12. Verwendung einer Leuchtstoffmischung aus zumindest
- (Y,Gd)BO₃:Eu
zur Herstellung einer roten Signallampe nach Anspruch 1 oder 2.

13. Verwendung einer Leuchtstoffmischung nach Anspruch 12, wobei zur Herstellung eines normierten Signalrots zusätzlich ein Filter verwendet wird.

14. Verwendung einer Signallampe nach Anspruch 1 oder 2, insbesondere in Verbindung mit einer Verwendung einer Leuchtstoffmischung nach einem der Ansprüche 3 bis 13, zur Herstellung eines Verkehrsschilds oder Verkehrssignals.

15. Verwendung nach Anspruch 14 zur Herstellung einer Verkehrsampel.

16. Verwendung nach Anspruch 14 zur Herstellung einer Kraftfahrzeugsignallampe.
